# EUROPEAN PATENT APPLICATION

(11) **EP 4 651 003 A1**
(43) Date of publication of application: **19.11.2025**
(21) Application number: 25175202.8
(22) Date of filing: 08.05.2025
(51) Int. Cl.: G06F 21/75, H04L 9/00

(54) **CLOAKING CIRCUITS TO OBFUSCATE INDICATIONS OF CIRCUIT ACTIVITY IN PROCESSING CIRCUITS AND RELATED METHODS**

(30) Priority: 15.05.2024 US 202418665437
(71) Applicant: Microsoft Technology Licensing, LLC, Redmond, WA 98052 (US)
(72) Inventor: DYER, Kenneth Colin, Redmond, WA 98052 (US)
(74) Representative: CMS Cameron McKenna Nabarro Olswang LLP

(57) **Abstract**

The indications of circuit activity in an electrical signal may be obtained by monitoring the electrical terminal or wire by way of an electrical connection or by sensing changes in magnetic and electric fields. A cloaking circuit may be coupled to the electrical terminal to obfuscate the indications of circuit activity of the processing circuit to reduce or avoid successful monitoring that may lead to a breach of data security. Obfuscating the indications of circuit activity includes modifying a signal on the electrical terminal to render the circuit activity more obscure, unclear, or unintelligible. In some examples, modifying the signal on the electrical terminal may include generating a cloaking signal on the electrical terminal. In some examples, generating the cloaking signal may include analyzing the signal to detect indications of circuit activity and generating the cloaking signal based on the circuit activity.

## Description

### Field of the Disclosure

The technology of the disclosure relates, in general, to data security in processors and processing circuits and, in particular, to preventing successful attacks on data security.

### Background

Confidential data is stored and processed in electronic circuits in many types of devices and systems, ranging from smart chips on credit cards or hand-held electronic devices (e.g., smartphones) to data centers used in cloud-based computing and data storage. The users of such devices and systems, which may be individuals, organizations, businesses, and/or governments, expect data security. Unfortunately, there are frequent, ongoing attempts to steal, control, change, or delete such data, and the methods and technologies that are used are constantly evolving. The occurrence of such attacks by way of invasive software received over the Internet is well known, but direct, physical access methods may be used when an attacker has possession of a device or is simply in close proximity to the device. Advanced methods may involve employing oscilloscopes or other devices to monitor electrical signals on wires or terminals that are electrically coupled to processors or processing circuits. In this manner, commands or data transferred on wires or buses to and from the processing circuits may be detected. Another approach involves monitoring the changes in electric fields caused by analog signals on a wire or terminal. For example, data may be obtained surreptitiously from a credit or debit card in an individual's clothing pocket or purse by a device that emits a wireless signal and detects a response. In another example, when security codes are transmitted wirelessly, they may be retrieved from the air with a device configured to listen to the appropriate frequencies. Even small changes in the electrical characteristics of a power signal provided to processing circuits can be used to detect signal activity or lack thereof. Especially when an attacker has detailed knowledge of the operation of the processing circuits, the information obtained by the above methods can be used to gain access to the confidential data.

### Summary

Exemplary aspects disclosed herein include cloaking circuits to obfuscate indications of circuit activity in processing circuits. Related methods of cloaking electrical terminals of processing circuits to reduce breaches of data security are also disclosed. Signal activity in electrical signals on an electrical terminal or wire coupled to a processing circuit may provide indications of the circuit activity in the processing circuit. These indications may be used to identify activity states of the processing circuit, such as pauses in circuit activity, during which the processing circuit may be vulnerable to attack. The indications of circuit activity in an electrical signal may be obtained by monitoring the electrical terminal or wire by way of an electrical connection or by sensing changes in magnetic and electric fields. An exemplary cloaking circuit may be coupled to the electrical terminal to obfuscate the indications of circuit activity of the processing circuit to reduce or avoid successful monitoring that may lead to a breach of data security. Obfuscating the indications of circuit activity includes modifying a signal on the electrical terminal to render the circuit activity more obscure, unclear, or unintelligible. In some examples, modifying the signal on the electrical terminal may include generating a cloaking signal on the electrical terminal. In some examples, generating the cloaking signal may include analyzing the signal to detect indications of circuit activity and generating the cloaking signal based on the circuit activity.

In one exemplary aspect, a circuit is disclosed. The circuit includes an electrical terminal; a processing circuit disposed on an integrated circuit (IC) chip and coupled to the electrical terminal, wherein a first signal on the electrical terminal indicates circuit activity of the processing circuit; and a cloaking circuit coupled to the electrical terminal and configured to modify the first signal on the electrical terminal to obfuscate the indication of the circuit activity.

In another exemplary aspect, a cloaking circuit is disclosed. The cloaking circuit is configured to couple to an electrical terminal coupled to a processing circuit, wherein a first signal on the electrical terminal indicates circuit activity of the processing circuit; and modify the first signal on the electrical terminal to obfuscate the indication of the circuit activity.

In another exemplary aspect, a method of a cloaking circuit coupled to an electrical terminal of a processing circuit on an integrated circuit (IC), wherein a first signal on the electrical terminal indicates circuit activity of the processing circuit. The method includes modifying the first signal on the electrical terminal to obfuscate the indication of the circuit activity.

### Brief Description of the Drawing Figures

The accompanying drawing figures incorporated in and forming a part of this specification illustrate several aspects of the disclosure and, together with the description, serve to explain the principles of the disclosure.
Figure 1 is a schematic diagram illustrating a circuit in which an electrical terminal of a processing circuit is coupled to a cloaking circuit configured to obfuscate indications of circuit activity of the processing circuit on the electrical terminal to reduce breaches of data security;
Figure 2 is a flow chart of a method in the circuit in Figure 1 of modifying an electrical signal on the electrical terminal to obfuscate the indication of the circuit activity of a processing circuit;
Figure 3 is a schematic diagram of one example of a digital-to-analog converter (DAC) that may be employed in the cloaking circuit in Figure 1;
Figure 4 is a schematic diagram of a low-impedance tunable filter that may be coupled to an electrical terminal to reduce or prevent noise in the electrical terminal;
Figure 5 is a schematic diagram of an N-bit pseudo-random number generator circuit configured to generate pseudo-random values from which pseudo-random analog signal activity may be generated on the electrical terminal in Figure 1;
Figure 6 is a schematic diagram of a tone generator circuit configured to generate signal activity at programmable frequencies on an electrical terminal;
Figure 7 is a schematic diagram of an adaptive noise cancellation circuit that receives a signal on an electrical terminal and generates signal activity on the electrical terminal to cancel out the received signal; and
Figure 8 is a block diagram of an exemplary processor-based system that comprises processing circuits included on an IC chip, including a plurality of electrical terminals from which circuit activity may be monitored and to which a cloaking circuit may be coupled to obfuscate indications of the circuit activity to reduce breaches of data security in the processor-based system.

### Detailed Description

With reference to the drawing figures, several exemplary aspects of the present disclosure are described. The word "exemplary" is used herein to mean "serving as an example, instance, or illustration." Any aspect described herein as "exemplary" is not necessarily to be construed as preferred or advantageous over other aspects.

Exemplary aspects disclosed herein include cloaking circuits to obfuscate indications of circuit activity in processing circuits. Related methods of cloaking electrical terminals of processing circuits to reduce breaches of data security are also disclosed. Signal activity in electrical signals on an electrical terminal or wire coupled to a processing circuit may provide indications of the circuit activity in the processing circuit. These indications may be used to identify activity states of the processing circuit, such as pauses in circuit activity, during which the processing circuit may be vulnerable to attack. The indications of circuit activity in an electrical signal may be obtained by monitoring the electrical terminal or wire, by way of an electrical connection or by sensing changes in magnetic and electric fields. An exemplary cloaking circuit may be coupled to the electrical terminal to obfuscate the indications of circuit activity of the processing circuit to reduce or avoid successful monitoring that may lead to a breach of data security. Obfuscating the indications of circuit activity includes modifying a signal on the electrical terminal to render the circuit activity more obscure, unclear, or unintelligible. In some examples, modifying the signal on the electrical terminal may include generating a cloaking signal on the electrical terminal. In some examples, generating the cloaking signal may include analyzing the signal to detect indications of circuit activity and generating the cloaking signal based on the circuit activity.

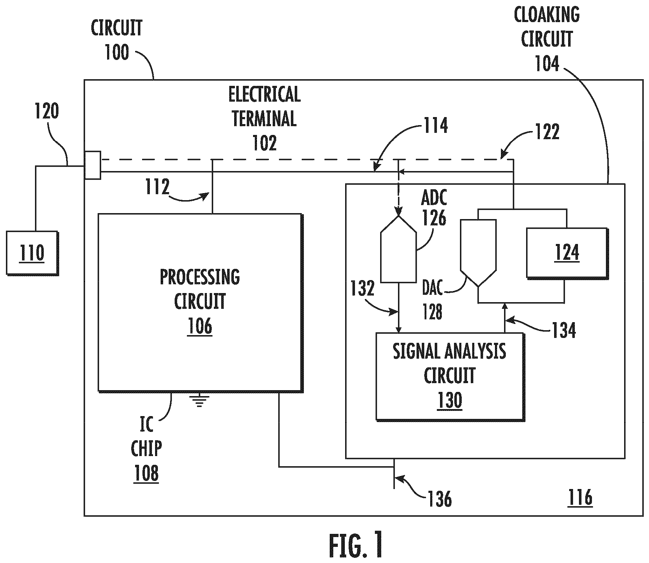

Figure 1 is a schematic diagram of a circuit 100 including an electrical terminal 102 coupling an exemplary cloaking circuit 104 to a processing circuit 106 disposed on an integrated circuit chip 108. The electrical terminal 102 also couples the processing circuit 106 to a first circuit 110 external to the circuit 100. A first signal 112 on the electrical terminal 102 may indicate circuit activity occurring in the processing circuit 106. For example, variations in the voltage or current of the first signal 112, the frequency of such variations, and patterns of such variations may be detectable by monitoring the electrical terminal 102 and may be used to obtain information about circuit activity in the processing circuit 106. Information obtained in this manner may be used to breach data security of the processing circuit 106, which may include stealing, changing, controlling, or deleting the data. In some examples, the information obtained by monitoring the electrical terminal 102 may be used to interrupt and take over operation of the processing circuit 106, which can also result in a breach of data security.

In an exemplary aspect, the cloaking circuit 104 may be employed to modify the first signal 112 on the electrical terminal 102 for the purpose of obfuscating the indication of circuit activity, to avoid a breach of data security. Modification of the first signal 112 may include generating a cloaking signal 114 on the electrical terminal 102 in addition to the first signal 112. The first signal 112 and the cloaking signal 114 may be indistinguishable from each other when the electrical terminal 102 is monitored. Thus, indication of circuit activity in the processing circuit 106 may be rendered obscure, confusing, unclear, or unintelligible to the observer, thereby preventing or reducing the ability to obtain information, by way of monitoring the electrical terminal 102 that may be used to breach data security of the processing circuit 106.

Monitoring the electrical terminal 102 may include forming an electrical connection, directly or indirectly, between the electrical terminal 102 and a probe or other input of an oscilloscope or other device, for example, that can be used to observe, capture, and analyze the first signal 112. Such device may be able to identify signal activity in the first signal 112, which may include changes in the voltage or current (e.g., voltage steps, spikes, noise, or pulses), voltage oscillations at one or more frequencies, changes in the frequency or frequencies of voltage oscillations, changes in the magnitudes of voltage oscillations, and/or patterns of voltage changes, for example. Such signal activity of the first signal 112 may be an indication of circuit activity in the processing circuit 106.

Monitoring the electrical terminal 102 may additionally or alternatively include monitoring the electric field and/or magnetic field, and changes thereto, around (e.g., external to) the electrical terminal 102, which may include placing a probe or other monitoring device in close proximity to the electrical terminal 102. Changes in the magnetic and electric fields may be created by current (e.g., of the first signal 112) through the electrical terminal 102 and changes to such current or voltage, for example. In this manner, information may be obtained about circuit activity in the processing circuit 106 without direct contact with the circuit 100.

Figure 1 illustrates one example of the circuit 100 in which the exemplary cloaking circuit 104 may be employed. In this example, the IC chip 108 is disposed on a substrate 116, where the IC chip 108 may be a chiplet, the substrate 116 may be a system on chip (SoC), and the cloaking circuit 104 may be disposed on another chiplet. In some examples, the cloaking circuit 104 may be disposed on the IC chip 108 and the electrical terminal 102 is disposed on the substrate 116. In some examples, the substrate 116 may be a carrier substrate in an IC package and the cloaking circuit 104 may be disposed in another IC chip on the carrier. In some examples, the substrate 116 may be a printed circuit board.

The electrical terminal 102 in Figure 1 is coupled to the external circuit 110, which is external to the processing circuit 106 and may be external to the circuit 100. In some examples, the electrical terminal 102 may provide a supply voltage to power the processing circuit 106. In such examples, the external circuit 110 may be a power source providing the supply voltage. The electrical terminal 102 may be included in a power grid or power distribution network and comprise one of multiple sources of power provided to the processing circuit. In some examples, the electrical terminal 102 is a control signal received in or generated in the processing circuit 106. In some examples, the electrical terminal 102 may be a wire or bit of a bus or cable 120 that transmits and/or receives instructions or data (or both) from the external circuit 110. The bus or cable 120 may transmit the instructions or data as multiple bits provided in parallel or sequentially as single-ended or differential signals. In some examples, in addition to the cloaking signal 114 on the electrical terminal 102, the cloaking circuit 104 may be configured to generate a second cloaking signal 122 on a second bit of the bus 120. In such examples, the external circuit 110 may be any other type of circuit configured to communicate with the processing circuit 106 including another processing circuit, a memory, memory control circuit, graphics processing unit (GPU), arithmetic logic unit (ALU), display, output device, or input device, for example.

The processing circuit 106 may be a processor configured to execute instructions. The processing circuit 106 may be a state machine or other logic circuits comprising combinational and/or sequential logic circuits including transistor circuits. In this regard, the processing circuit 106 may include transistor circuits that change state periodically in response to a clock signal. Thus, power may be consumed in the processing circuit 106 in each cycle of the clock signal, causing a periodic variation to the power provided to the processing circuit on the electrical terminal 102. There may be other reasons, not related to a clock signal, that cause a periodic variation on the electrical terminal 102. In some examples, periodic variation in the power may be detected as the first signal 112 by a monitoring device employing one of the methods described above. Thus, when circuit activity in the processing circuit 106 changes, such as when there is a brief pause, the first signal 112 is detectable in the electrical terminal 102. Detection of a pause in the circuit activity provides information that may be employed to breach the data security of the processing circuit 106.

As the processing circuit 106 transmits or receives instructions, data, and/or control signals on inputs and/or outputs such as the electrical terminal 102, the information (e.g., instructions or data) being transmitted or received via the first signal 112 may be obtained by monitoring changes and/or the magnitude of such changes in the first signal 112. Alternatively, the frequency with which the first signal 112 changes or a pattern of such changes may be indicative of circuit activity in the processing circuit 106.

As noted above, the cloaking circuit 104 is provided to modify the first signal 112 to obfuscate indication of circuit activity on the electrical terminal 102, thereby reducing or eliminating the possibility of detecting circuit activity of the processing circuit 106 by monitoring the electrical terminal 102. Modifying the first signal 112 may include generating a cloaking signal 114 on the electrical terminal 102. The cloaking signal 114 may cause variations in the current and/or voltage on the electrical terminal 102 in addition to variations due to the current activity in the processing circuit 106. In this manner, it may be difficult or impossible to determine, by monitoring the electrical terminal 102, which variations correspond to circuit activity of the processing circuit 106 and which variations are due to the cloaking signal 114. In some aspects, the cloaking signal 114 may cause variations in current or voltage that overlap in time with variations caused by circuit activity in the processing circuit 106. When combined with the current signal activity, the cloaking signal 114 changes the first signal 112. For example, a first positive voltage spike or pulse of a first duration having a first magnitude caused by circuit activity in the processing circuit 106 may be offset by a negative voltage spike or pulse of the first duration having the first magnitude, resulting in cancellation of the positive spike. In some examples, a spike or pulse having a different duration, magnitude, or polarity (e.g., positive or negative) in the cloaking signal 114 may be employed to otherwise modify (not fully cancel) the first positive voltage spike or pulse.

In the example of the cloaking circuit 104 in Figure 1, the cloaking circuit 104 includes a signal generation circuit 124, an analog-to-digital converter (ADC) 126, a digital-to-analog converter (DAC) 128, and a signal analysis circuit 130. In other examples, the cloaking circuit 104 may comprise any subset of the components shown. For example, the cloaking circuit 104 may consist of the signal generation circuit 124. The signal generation circuit 124 may generate the cloaking signal 114 on the electrical terminal 102. The signal generation circuit 124 may have one or more forms and functions, as described in more detail below.

The ADC 126 may be coupled to the electrical terminal 102 to receive the first signal 112 in analog form and convert the first signal 112 into first digital information 132. The digital information 132 may be provided to the signal analysis circuit 130, which is configured to analyze the first signal 112 (e.g., the digital information 132) to detect indications of the circuit activity. The signal analysis circuit 130 may determine, based on the first digital information 132, features of the cloaking signal 114 used to obfuscate the indication of circuit activity in the first signal 112 on the electrical terminal 102. In other words, in response to analyzing the digital information 132 in the signal analysis circuit 130, the cloaking circuit 104 is configured to generate the cloaking signal 114 based on the circuit activity, to obscure recognition of the circuit activity. For example, the cloaking signal 114 may include variations in the voltage on the electrical terminal 102 during periods in which there is a pause in voltage variations due to circuit activity. Since a state of the processing circuit 106 may be detectable based on the pause, and there is a need to avoid recognition of such pause by a monitoring device, it would be desirable to render the pause in circuit activity less apparent. This may be achieved by injecting, by way of the cloaking signal 114, signal activity (e.g., voltage variations) on the first signal 112 during the pause. An alternative approach would be to generate the cloaking signal 114 to cancel any indications of the circuit activity in the processing circuit, so that the pause is not apparent. Other approaches are also possible. A pause in the circuit activity is just one example of a feature of the first signal 112 that may be used to breach data security of the processing circuit 106 and, therefore, is one example of a feature that the cloaking circuit 104 is configured to obfuscate, which may include generating the cloaking signal 114 onto the electrical terminal 102.

The signal analysis circuit 130 may be programmable to customize the signal activity (e.g., voltage variations, spike, or pulses) on the first signal 112 due to the cloaking signal 114. Such signal activity generated on the electrical terminal 102 may be referred to as camouflage signal activity, because such signal activity may be used to make the signal activity due to real circuit activity less obvious. In some examples, the signal analysis circuit 130 may generate the cloaking signal 114 in digital form as second digital information 134. That is, the cloaking circuit 104 is configured to generate the second digital information 134 based on the first digital information 132. The second digital information 134 is provided to the DAC 128 in which it is converted to analog form for generation on the electrical terminal 102. Thus, the cloaking circuit 104 is configured to generate the cloaking signal 114 based on the second digital information 134. Operation of the cloaking circuit 104 may be controlled by a mode control interface 136, which may indicate a mode of the cloaking circuit 104 and/or program control registers to perform the actions of the cloaking circuit 104 described above. The mode control interface 136 may also be provided to the processing circuit 106, which may need to be configured to ignore the cloaking signal 114.

In other examples, the signal analysis circuit 130 may control the signal generation circuit 124 to generate the cloaking signal 114 oscillating at one or more selected frequencies and/or having signal activity occur at one or more frequencies in one or more ranges of frequencies. The first signal 112 may include voltage oscillations at a first frequency and one or more harmonic frequencies (e.g., multiples or fractions) of the first frequency. The signal analysis circuit 130 may detect the first frequency and the harmonic frequencies in the first digital information 132 and generate the cloaking signal 114 including voltage oscillations having at least a third frequency different than the first frequency and the harmonic frequencies.

The first signal 112 may include voltage oscillations having a first phase or timing and a first magnitude, and the cloaking circuit 104 is configured to generate the cloaking signal 114 including oscillations having the first magnitude, and a second phase opposite to the first phase of the first signal 112. In this manner, the cloaking signal 114 may cancel the first signal 112.

In some examples, the signal analysis circuit 130 is configured to measure the power spectral density (PSD) of the first signal 112, compare the measured PSD to a target PSD, and generate the cloaking signal 114 based on a difference between the measured PSD and the target PSD. The PSD is a view of the frequencies in the first signal 112 based on their probabilities and the target PSD is the expected frequencies of the first signal 112 during respective states in the circuit 100 or the processing circuit 106. For example, the expected frequencies in the first signal 112, and thus the PSD, may vary based on a sleep mode, a high processing load, accessing multimedia, a system boot-up, a power-saving mode, etc. As an example, a target PSD of a high processing load may include a frequency of a system clock signal and white noise, whereas a target PSD in a sleep mode may include bursts of activity followed by periods of inactivity. Accordingly, the signal analysis circuit 130 may generate the cloaking signal 114 in response to a pattern comprising unexpected frequencies detected in the ADC 126 during a sleep mode.

As noted above, the electrical terminal 102 may be one bit of a multi-bit bus 120 configured to transmit instructions and/or data in parallel. The signal analysis circuit 130 may be able to detect first signal activity in the first signal 112 indicating a first type of transaction corresponding to the circuit activity of the processing circuit 106 and generate the cloaking signal 114 to include second signal activity resembling the first type of transaction but where such second signal activity does not correspond to circuit activity in the processing circuit. In other words, the first signal activity on the first signal 112 indicates a transfer of instructions or data on the bus 120 to or from the processing circuit and, thereby, causing or resulting from circuit activity in the processing circuit, but the second signal activity does not similarly cause or result from circuit activity in the processing circuit 106 even though the second signal activity of the cloaking signal 114 appears to be the same (e.g., in value, pattern or sequence) as the first signal activity. In this regard, in some examples, the cloaking signal 114 does not correspond to circuit activity in the processing circuit 106.

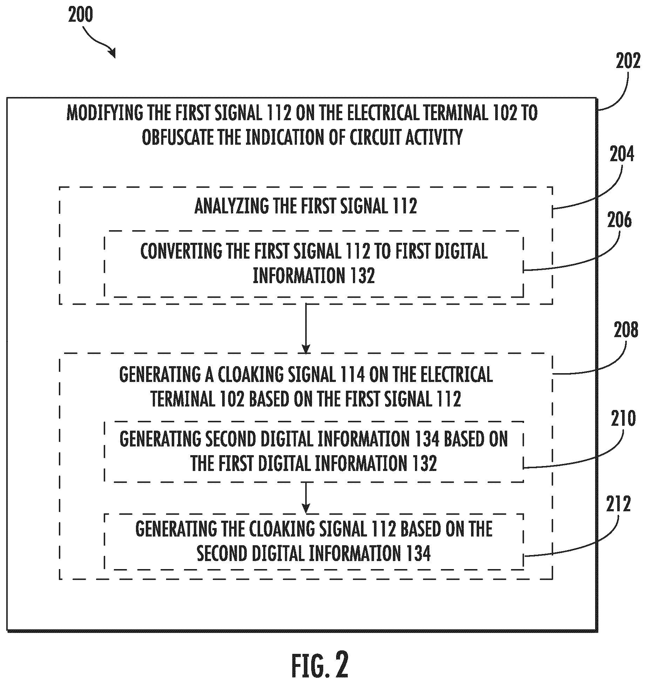

Figure 2 is a flow chart of a method 200 of a cloaking circuit 104 coupled to an electrical terminal 102 coupled to a processing circuit 106 on an integrated circuit (IC) 108 as shown in Figure 1, wherein a first signal 112 on the electrical terminal 102 indicates circuit activity of the processing circuit 106. The method 200 comprises modifying the first signal on the electrical terminal to obfuscate the indication of the circuit activity (block 202). Optionally, the method 200 may include analyzing the first signal 112 (block 204), and generating a cloaking signal 114 on the electrical terminal 102 based on the first signal 112 (block 208). In some examples, the method 200 may include converting the first signal 112 to first digital information 132 (block 206), generating second digital information 134 based on the first digital information 132 (block 210), and generating the cloaking signal 114 based on the second digital information 134 (block 212).

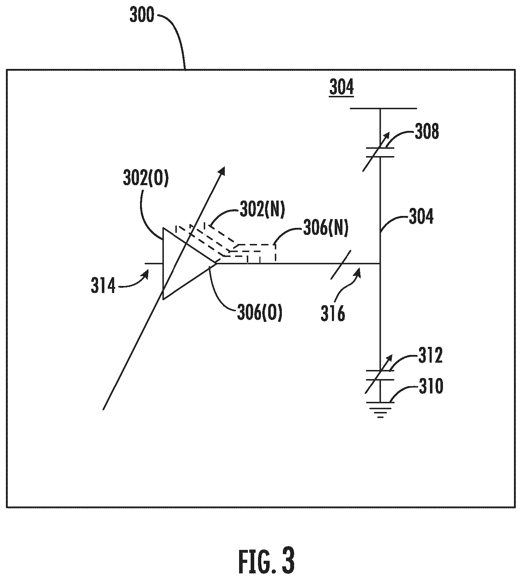

Figure 3 is a schematic diagram of one example of a digital-to-analog converter (DAC) 300, which may be the DAC 128 in Figure 1. The DAC 300 includes buffers 302(0)-302(N), which may each have different drive strengths. An electrical terminal 304 corresponding to the electrical terminal 102 in Figure 1 is coupled to outputs 306(0)-306(N) of the buffers 302(0)-302(N) through a drive capacitor 308. The outputs 306(0)-306(N) are coupled to a reference node 310 through a second capacitor 312. The buffers 302(0)-302(N) receive a first digital signal 314 and generate an analog signal 316 on the electrical terminal 304. The DAC 300 in Figure 3 is just one example of a digital-to-analog converter that may be employed in the cloaking circuit 104 in Figure 1 or in another cloaking circuit according to the present disclosure. Additional details of the operation of the DAC 300 are beyond the scope of this disclosure.

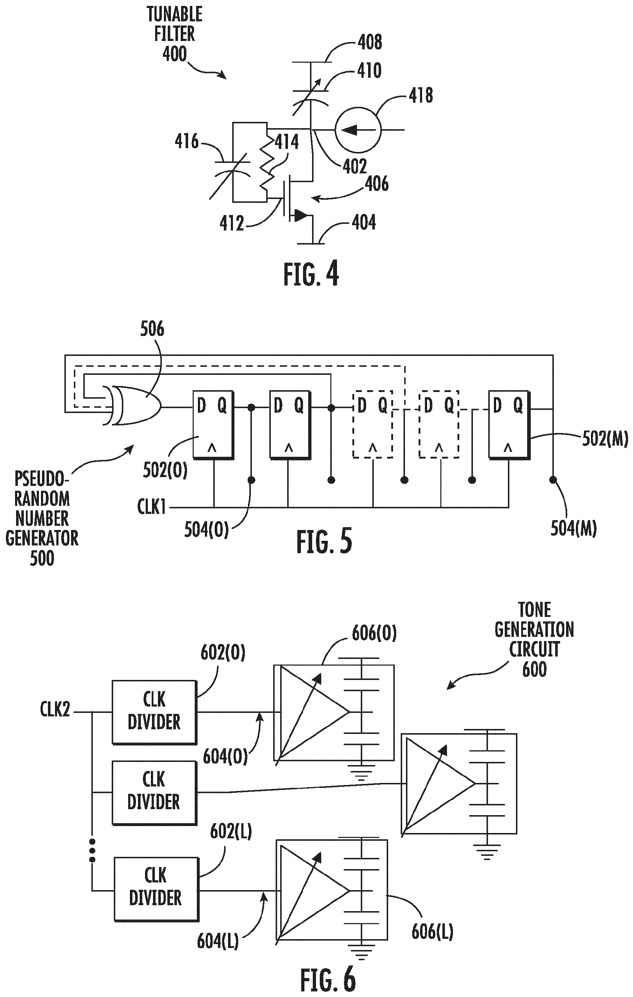

Figure 4 is an example of a tunable filter 400 that may be employed in the signal generation circuit 124 in Figure 1. The tunable filter 400 includes a node 402 coupled to a ground node or a reference voltage node 404 through a switch 406. The tunable filter 400 may be tuned (adjusted to a desired frequency or frequency range) to modify the first signal 112 to reduce the indications of the circuit activity on the electrical terminal 102. The node 402 is coupled to an electrical terminal 408 that may be the electrical terminal 102 in Figure 1 through a first capacitor 410. The node 402 is coupled to a gate 412 of the switch 406 through a resistor 414 and a second capacitor 416 coupled in parallel. A current source 418 provides a current to the node 404. The purpose of this current is to change the "resistance" of the switch 406, thus tuning the "R" part of the tuned filter. By adjusting the first capacitor 410, the second capacitor 416, and the current source 418, the poles and zero of the tunable filter 400 can be tuned to the desired response. The first capacitor 410 sets the base frequency of the tunable filter 400. A capacitance of the first capacitor 410 may be set and/or adjusted based on analysis of the first signal 112 in the signal analysis circuit 130. Details of the operation of a tunable filter are beyond the scope of this disclosure and are not provided here.

In some examples, signal activity in the first signal 112 can include multiple frequencies. Such signal activity in the first signal 112 may be modified by coupling multiple tunable filters 400 to the electrical terminal 102, reducing or preventing voltage spikes at certain frequencies to further obfuscate the indications of circuit activity. The tunable filter 400 is a non-limiting example of circuits that may be employed to generate the cloaking signal 114 in the cloaking circuit 104 to obfuscate the first signal 112.

Figure 5 is a schematic diagram of a pseudo-random number (PRN) generator 500 that may be employed in the signal generation circuit 124 or the signal analysis circuit 130 for the purpose of generating the cloaking signal 114 including pseudo-random signal activity that, when provided to the electrical terminal 102, may modify the first signal 112 to render the signal activity therein more obscure or difficult to interpret when monitored externally, as discussed above. The PRN generator 500 shown in Figure 5 includes a plurality of data storage elements 502(0)-502(M) (e.g., Flip-Flops or latches) coupled in series and some of their outputs 504(0)-504(M) being input to an exclusive-OR (XOR) circuit 506. The PRN generator 500 emulates registers processing random data on the chip 108. Each cycle of the clock signal CLK1, a pseudo-random number is generated on the outputs 504(0)-504(M). This creates a noise-pattern similar to registers processing user data. Logic gates and registers toggling in the system to process data appear as random noise. The data storage elements 502(0)-502(M) provide a delay chain whose outputs cause the XOR circuit 506 to oscillate in a pseudo-random pattern that repeats after a period that depends on the number M+1 of data storage elements 502(0)-502(M). The length of the pattern is proportional to 2^M+1. By changing the data storage elements 502(0)-502(M) that are provided as inputs to the XOR circuit 506, a pattern that represents the random processing of data can be emulated. When combined with a tone generator 600, as shown in Figure 6, a first-order approximation of on-chip processing noise can be generated. The PRN generator 500 is a non-limiting example of circuits that may be employed to generate the cloaking signal 114 comprising pseudo-random noise in the cloaking circuit 104 to obfuscate the first signal 112.

Figure 6 is a schematic diagram of a tone generator 600 that may be employed in the cloaking circuit 104 to generate oscillations or voltage variations at various selected frequencies in the cloaking signal 114. The tone generator 600 includes clock dividers 602(0)-602(L) that may each be set to divide the frequency of a reference clock signal CLK2 by a different dividend to generate square-wave clock signals 604(0)-604(L) at desired frequencies. These clock signals 604(0)-604(L) are provided to DACs 606(0)-606(L), which may each be similar to the DAC 300 in Figure 3, to convert the square-wave clock signals to analog signals in which the voltages gradually oscillate at the desired frequency. Including oscillating signals of different frequencies in the cloaking signal 114 of Figure 1 in addition to any periodic oscillations in the first signal 112 may obfuscate, camouflage, or render obscure the circuit activity in the processing circuit 106. Thus, the tone generator 600 may be employed in the cloaking circuit 104 in Figure 1, such as in the signal generation circuit 124, where the signal analysis circuit 130 configures the clock dividers 602(0)-602(L) to frequencies that may be selected based on (e.g., different than) frequencies detected in the first digital information 132. The tone generator 600 is a non-limiting example of circuits that may be employed to generate the cloaking signal 114 in the cloaking circuit 104 to obfuscate the first signal 112.

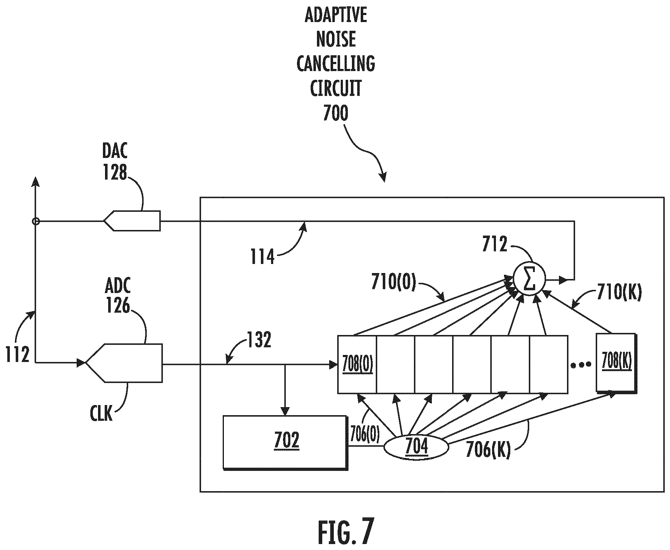

Figure 7 is an example of an adaptive noise cancelling circuit 700 that may be employed in the cloaking circuit 104 to generate a cloaking signal 114, as shown in Figure 1, that cancels out signal activity in the first signal 112. As shown, the adaptive noise cancelling circuit 700 receives, from the ADC 126, samples of data in the first signal 112 in digital form as the first digital information 132. Each of the samples is stored in one of a plurality of delay line circuits 708(0)-708(K). The adaptive noise cancelling circuit 700 includes a least-means-squared (LMS) loop 702 that creates a set of weight coefficients 706(0)-706(K) that are stored in a weight storage circuit 704. The weight coefficients 706(0)-706(K) are applied to weigh or scale the sample values stored in the delay line circuits 708(0)-708(K) to generate scaled samples 710(0)-710(K). The scaled samples 710(0)-710(K) are provided to a summing circuit 712, which generates the second digital information 134 based on the sum of the generated scaled samples 710(0)-710(K). The second digital information 134 is provided to the DAC 128, which generates the cloaking signal 114 on the electrical terminal 102, effectively cancelling out the signal activity of the first signal 112. The LMS loop 702 employs an LMS method to scale the weight coefficients 706(0)-706(K) in such a way that the root-mean-square (RMS) power of the first digital information 132 generated in the ADC 126 is minimized. In ideal operation, the first digital information 132 would not include noise. The performance of the adaptive noise cancelling circuit 700 depends on the expected signals at the first input signal 112 and the corresponding number K of the delay line circuits 708(0)-708(K). In some examples, a pattern of scaled samples 710(0)-710(K) in a particular state of the circuit 100 may be captured in a memory (not shown) and driven through the DAC 128 to recreate the cancelled noise. Additionally, after adaptation, the weight coefficients 706(0)-706(K) contain information about the PSD of the system and may be employed to detect a PSD type attack. The adaptive noise cancelling circuit 700 is a non-limiting example of circuits that may be employed to generate the cloaking signal 114 in the cloaking circuit 104 to obfuscate the first signal 112.

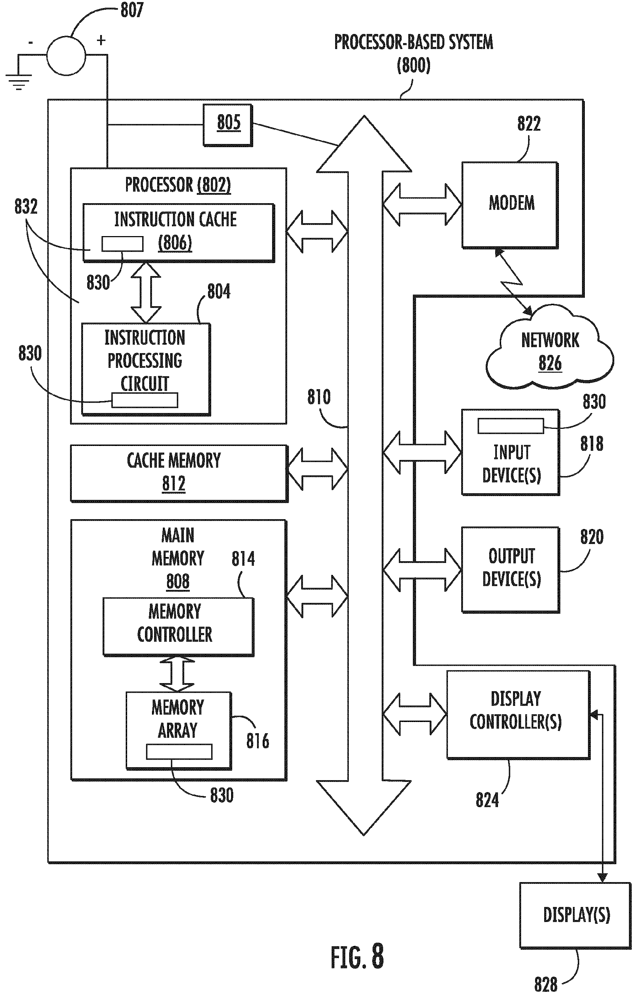

Figure 8 is a block diagram of an exemplary processor-based system 800 that includes a processor 802 (e.g., a microprocessor), including an instruction processing circuit 804. The processor-based system 800 may be a circuit or circuits included in an electronic board card, such as a printed circuit board (PCB), a server, a personal computer, a desktop computer, a laptop computer, a personal digital assistant (PDA), a computing pad, a mobile device, or any other device, and may represent, for example, a server, or a user's computer. In this example, the processor-based system 800 includes the processor 802. The processor 802 represents one or more general-purpose processing circuits, such as a microprocessor, central processing unit, or the like. More particularly, the processor 802 may be an EDGE instruction set microprocessor or other processor implementing an instruction set that supports explicit consumer naming for communicating produced values resulting from execution of producer instructions. The processor-based system 800 may include a cloaking circuit 805 coupled to an electrical terminal of the processor 802 in an effort to reduce or prevent breaches of data security of the processor-based system 800.

The processor 802 is configured to execute processing logic in instructions for performing the operations and steps discussed herein. In this example, the processor 802 includes an instruction cache 806 for temporary, fast access memory storage of instructions accessible by the instruction processing circuit 804. Fetched or prefetched instructions from a memory, such as a main memory 808, over a system bus 810, are stored in the instruction cache 806. Data may be stored in a cache memory 812 coupled to the system bus 810 for low-latency access by the processor 802. The instruction processing circuit 804 is configured to process instructions fetched into the instruction cache 806 and process the instructions for execution. In some examples, the cloaking circuit 805 may additionally or alternatively be coupled to an electrical terminal of the system bus 810.

The processor 802 and the main memory 808 are coupled to the system bus 810 and can intercouple peripheral devices included in the processor-based system 800. As is well known, the processor 802 communicates with these other devices by exchanging address, control, and data information over the system bus 810. For example, the processor 802 can communicate bus transaction requests to a memory controller 814 in the main memory 808 as an example of a slave device. Although not illustrated in Figure 8, multiple system buses 810 could be provided, wherein each system bus 810 constitutes a different fabric. In this example, the memory controller 814 is configured to provide memory access requests to a memory array 816 in the main memory 808. The memory array 816 is comprised of an array of storage bit cells for storing data. The main memory 808 may be a read-only memory (ROM), flash memory, dynamic random-access memory (DRAM), such as synchronous DRAM (SDRAM), etc. and/or static memory (e.g., flash memory, SRAM, etc.), as non-limiting examples.

Other devices can be connected to the system bus 810. As illustrated in Figure 8, these devices can include the main memory 808, one or more input device(s) 818, one or more output device(s) 820, a modem 822, and one or more display controllers 824, as examples. The input device(s) 818 can include any type of input device, including but not limited to input keys, switches, voice processors, etc. The output device(s) 820 can include any type of output device, including but not limited to audio, video, other visual indicators, etc. The modem 822 can be any device configured to allow an exchange of data to and from a network 826. The network 826 can be any type of network, including but not limited to a wired or wireless network, a private or public network, a local area network (LAN), a wireless local area network (WLAN), a wide area network (WAN), a BLUETOOTH^{™} network, and the Internet. The modem 822 can be configured to support any type of communications protocol desired. The processor 802 may also be configured to access the display controller(s) 824 over the system bus 810 to control information sent to one or more displays 828. The display(s) 828 can include any type of display, including but not limited to a cathode ray tube (CRT), a liquid crystal display (LCD), a plasma display, etc.

The processor-based system 800 in Figure 8 may include a set of instructions 830 to be executed by the processor 802 for any application desired according to the instructions. The instructions 830 may be stored in the main memory 808, the processor 802, and/or the instruction cache 806 as examples of a non-transitory computer-readable medium 832. The instructions 830 may also reside, completely or at least partially, within the main memory 808 and/or within the processor 802 during their execution. The instructions 830 may further be transmitted or received over the network 826 via the modem 822, such that the network 826 includes the computer-readable medium 832.

While the computer-readable medium 832 is shown in an exemplary embodiment to be a single medium, the term "computer-readable medium" should be taken to include a single medium or multiple media (e.g., a centralized or distributed database and/or associated caches and servers) that store the one or more sets of instructions. The term "computer-readable medium" shall also be taken to include any medium that is capable of storing, encoding, or carrying a set of instructions for execution by the processing device and that causes the processing device to perform any one or more of the methodologies of the embodiments disclosed herein. The term "computer-readable medium" shall accordingly be taken to include, but not be limited to, solid-state memories, optical medium, and magnetic medium.

The embodiments disclosed herein include various steps. The steps of the embodiments disclosed herein may be formed by hardware components or may be embodied in machine-executable instructions, which may be used to cause a general-purpose or special-purpose processor programmed with the instructions to perform the steps. Alternatively, the steps may be performed by a combination of hardware and software.

The embodiments disclosed herein may be provided as a computer program product or software that may include a machine-readable medium (or a computer-readable medium) having stored thereon instructions, which may be used to program a computer system (or other electronic devices) to perform a process according to the embodiments disclosed herein. A machine-readable medium includes any mechanism for storing or transmitting information in a form readable by a machine (e.g., a computer). For example, a machine-readable medium includes a machine-readable storage medium (e.g., ROM, random access memory ("RAM"), a magnetic disk storage medium, an optical storage medium, flash memory devices, etc.), and the like.

Unless specifically stated otherwise and as apparent from the previous discussion, it is appreciated that throughout the description, discussions utilizing terms such as "processing," "computing," "determining," "displaying," or the like refer to the action and processes of a computer system, or similar electronic computing device, that manipulates and transforms data and memories represented as physical (electronic) quantities within the computer system's registers into other data similarly represented as physical quantities within the computer system memories or registers or other such information storage, transmission, or display devices.

The algorithms and displays presented herein are not inherently related to any particular computer or other apparatus. Various systems may be used with programs in accordance with the teachings herein, or it may prove convenient to construct more specialized apparatuses to perform the required method steps. The required structure for a variety of these systems will appear from the description above. In addition, the embodiments described herein are not described with reference to any particular programming language. It will be appreciated that a variety of programming languages may be used to implement the teachings of the embodiments as described herein.

In one embodiment a circuit is defined. The circuit comprises an electrical terminal; a processing circuit disposed on an integrated circuit (IC) chip and coupled to the electrical terminal, wherein a first signal on the electrical terminal indicates circuit activity of the processing circuit; and a cloaking circuit coupled to the electrical terminal and configured to modify the first signal on the electrical terminal to obfuscate the indications of the circuit activity.

In some examples the cloaking circuit is further configured to generate a cloaking signal on the electrical terminal to modify the first signal.

In some examples, the cloaking circuit is configured to: analyze the first signal to detect the indications of the circuit activity; and generate the cloaking signal based on the circuit activity.

In some examples, the cloaking circuit comprises a signal analysis circuit configured to analyze the first signal; and a signal generation circuit configured to generate the cloaking signal.

In the above examples, in some cases, the cloaking circuit is further configured to measure a power spectral density (PSD) of the first signal; compare the PSD to a target PSD; and generate the cloaking signal based on a difference between the PSD and the target PSD.

In some examples, the cloaking circuit is further configured to convert the first signal to convert the first signal to first digital information; generate second digital information based on the first digital information; and generate the cloaking signal based on the second digital information.

In the above example, in some cases the first signal comprises voltage oscillations at a first frequency and harmonic frequencies of the first frequency; and the cloaking circuit is further configured to: detect the first frequency and the harmonic frequencies in the first digital information; and generate the cloaking signal comprising the voltage oscillations at least a third frequency different than the first frequency and the harmonic frequencies.

In some examples, the electrical terminal provides a supply voltage to power the processing circuit.

In some examples, the first signal includes first voltage oscillations having a first phase and a first magnitude; and the cloaking circuit is further configured to generate the cloaking signal including the first voltage oscillations having the first magnitude and a second phase opposite to the first phase.

In some examples, the electrical terminal comprises a first bit of a bus; and the cloaking circuit is further configured to generate a second cloaking signal on a second electrical terminal comprising a second bit of the bus.

In some examples, the cloaking circuit is further configured to detect first signal activity in the first signal indicating a first type of transaction corresponding to the circuit activity of the processing circuit; and generate, in the cloaking signal, second signal activity resembling the first type of transaction but not corresponding to the circuit activity of the processing circuit.

In some examples, the cloaking signal does not correspond to circuit activity in the processing circuit.

In some examples, the electrical terminal and the processing circuit are disposed on the IC chip.

In some examples, the IC chip is disposed on a substrate, the cloaking circuit is disposed on a second IC chip further disposed on the substrate; and the electrical terminal is disposed on the substrate.

In some examples, the cloaking circuit is configured to generate the cloaking signal comprising pseudo-random noise on the electrical terminal based on a pseudo-random number generator.

In some examples, the cloaking circuit further comprises a tunable filter, wherein the cloaking circuit is further configured to: analyze the first signal to detect the indications of the circuit activity; and tune the tunable filter to modify the first signal to reduce the indications of the circuit activity on the electrical terminal.

Another embodiment relates to a cloaking circuit configured to couple to an electrical terminal coupled to a processing circuit, wherein a first signal on the electrical terminal indicates circuit activity of the processing circuit; and modify the first signal on the electrical terminal to obfuscate the indications of the circuit activity.

Another embodiment relates to a method of a cloaking circuit coupled to an electrical terminal coupled to a processing circuit on an integrated circuit (IC), wherein a first signal on the electrical terminal indicates circuit activity of the processing circuit, the method comprising: modifying the first signal on the electrical terminal to obfuscate the indications of the circuit activity.

In some examples, the method further comprises generating a cloaking signal on the electrical terminal based on the first signal.

In some examples, the cloaking circuit comprises analyzing the first signal to identify the circuit activity; and generating the cloaking signal based on the circuit activity.

In some examples, the cloaking circuit comprises converting the first signal to first digital information; generating second digital information based on the first digital information; and generating the cloaking signal based on the second digital information.

In some examples, the method further comprises measuring a power spectral density (PSD) of the first signal; comparing the PSD to a target PSD; and generating the cloaking signal based on a difference between the PSD and the target PSD.

In some examples, the method comprises detecting a first frequency and harmonic frequencies of the first signal in the first digital information; and generating the cloaking signal comprising at least a third frequency different than the first frequency and the harmonic frequencies.

In some examples, the method comprises generating a pseudo-random number; and generating the cloaking signal comprising pseudo-random noise based on the pseudo-random number.

In some examples, the method comprises detecting, in the first signal, first voltage oscillations having a first phase and a first magnitude; and generating the cloaking signal comprising second oscillations having the first magnitude and a second phase opposite to the first phase.

In some examples, the method comprises detecting first signal activity in the first signal indicating a first type of transaction comprising a transfer of data of the processing circuit on the electrical terminal; and generating, in the cloaking signal, second signal activity resembling the first type of transaction but not corresponding to a transfer of data of the processing circuit.

In another embodiment, the indications of circuit activity in an electrical signal may be obtained by monitoring the electrical terminal or wire by way of an electrical connection or by sensing changes in magnetic and electric fields. A cloaking circuit may be coupled to the electrical terminal to obfuscate the indications of circuit activity of the processing circuit to reduce or avoid successful monitoring that may lead to a breach of data security. Obfuscating the indications of circuit activity includes modifying a signal on the electrical terminal to render the circuit activity more obscure, unclear, or unintelligible. In some examples, modifying the signal on the electrical terminal may include generating a cloaking signal on the electrical terminal. In some examples, generating the cloaking signal may include analyzing the signal to detect indications of circuit activity and generating the cloaking signal based on the circuit activity.

Those of skill in the art will further appreciate that the various illustrative logical blocks, modules, circuits, and algorithms described in connection with the embodiments disclosed herein may be implemented as electronic hardware, instructions stored in memory or in another computer-readable medium and executed by a processor or other processing device, or combinations of both. Memory disclosed herein may be any type and size of memory and may be configured to store any type of information desired. To clearly illustrate this interchangeability, various illustrative components, blocks, modules, circuits, and steps have been described above generally in terms of their functionality. How such functionality is implemented depends on the particular application, design choices, and/or design constraints imposed on the overall system. Skilled artisans may implement the described functionality in varying ways for each particular application, but such implementation decisions should not be interpreted as causing a departure from the scope of the present embodiments.

The various illustrative logical blocks, modules, and circuits described in connection with the embodiments disclosed herein may be implemented or performed with a processor, a Digital Signal Processor (DSP), an Application Specific Integrated Circuit (ASIC), a Field Programmable Gate Array (FPGA), or other programmable logic device, a discrete gate or transistor logic, discrete hardware components, or any combination thereof designed to perform the functions described herein. Furthermore, a controller may be a processor. A processor may be a microprocessor, but in the alternative, the processor may be any conventional processor, controller, microcontroller, or state machine. A processor may also be implemented as a combination of computing devices (e.g., a combination of a DSP and a microprocessor, a plurality of microprocessors, one or more microprocessors in conjunction with a DSP core, or any other such configuration).

The embodiments disclosed herein may be embodied in hardware and in instructions that are stored in hardware and may reside, for example, in RAM, flash memory, ROM, Electrically Programmable ROM (EPROM), Electrically Erasable Programmable ROM (EEPROM), registers, a hard disk, a removable disk, a CD-ROM, or any other form of computer-readable medium known in the art. An exemplary storage medium is coupled to the processor such that the processor can read information from and write information to the storage medium. In the alternative, the storage medium may be integral to the processor. The processor and the storage medium may reside in an ASIC. The ASIC may reside in a remote station. In the alternative, the processor and the storage medium may reside as discrete components in a remote station, base station, or server.

It is also noted that the operational steps described in any of the exemplary embodiments herein are described to provide examples and discussion. The operations described may be performed in numerous different sequences other than the illustrated sequences. Furthermore, operations described in a single operational step may actually be performed in a number of different steps. Additionally, one or more operational steps discussed in the exemplary embodiments may be combined. Those of skill in the art will also understand that information and signals may be represented using any of a variety of technologies and techniques. For example, data, instructions, commands, information, signals, bits, symbols, and chips that may be referenced throughout the above description may be represented by voltages, currents, electromagnetic waves, magnetic fields, optical fields, or particles, or any combination thereof.

Unless otherwise expressly stated, it is in no way intended that any method set forth herein be construed as requiring that its steps be performed in a specific order. Accordingly, where a method claim does not actually recite an order to be followed by its steps, or it is not otherwise specifically stated in the claims or descriptions that the steps are to be limited to a specific order, it is in no way intended that any particular order be inferred.

It will be apparent to those skilled in the art that various modifications and variations can be made without departing from the spirit or scope of the invention. Since modifications, combinations, sub-combinations, and variations of the disclosed embodiments incorporating the spirit and substance of the invention may occur to persons skilled in the art, the invention should be construed to include everything within the scope of the appended claims and their equivalents.

## Claims

1. A circuit (100) comprising:
an electrical terminal (102);
a processing circuit (106) disposed on an integrated circuit, IC, chip (108) and coupled to the electrical terminal (102), wherein a first signal (112) on the electrical terminal (102) indicates circuit activity of the processing circuit (106); and
a cloaking circuit (104) coupled to the electrical terminal (102) and configured to modify the first signal (112) on the electrical terminal (102) to obfuscate the indications of the circuit activity.

2. The circuit of claim 1, the cloaking circuit further configured to:
generate a cloaking signal on the electrical terminal to modify the first signal, wherein generating the cloaking signal comprises:
analyzing the first signal to detect the indications of the circuit activity; and
generating the cloaking signal based on the circuit activity.

3. The circuit of claim 2, the cloaking circuit comprising:
a signal analysis circuit configured to analyze the first signal; and
a signal generation circuit configured to generate the cloaking signal.

4. The circuit of claim 2 or claim 3, the cloaking circuit further configured to:
convert the first signal to first digital information;
generate second digital information based on the first digital information; and
generate the cloaking signal based on the second digital information.

5. The circuit of any of claim 2 to claim 4, the cloaking circuit further configured to:
measure a power spectral density, PSD, of the first signal;
compare the PSD to a target PSD; and
generate the cloaking signal based on a difference between the PSD and the target PSD.

6. The circuit of claim 4, wherein:
the first signal comprises voltage oscillations at a first frequency and harmonic frequencies of the first frequency; and
the cloaking circuit is further configured to:
detect the first frequency and the harmonic frequencies in the first digital information; and
generate the cloaking signal comprising the voltage oscillations at least a third frequency different than the first frequency and the harmonic frequencies.

7. The circuit of any of claim 1 to claim 6, wherein the electrical terminal provides a supply voltage to power the processing circuit.

8. The circuit of any of claim 2 to claim 7, wherein:
the first signal includes first voltage oscillations having a first phase and a first magnitude; and
the cloaking circuit is further configured to generate the cloaking signal including the first voltage oscillations having the first magnitude and a second phase opposite to the first phase.

9. The circuit of any of claim 2 to claim 8, wherein:
the electrical terminal comprises a first bit of a bus; and
the cloaking circuit is further configured to generate a second cloaking signal on a second electrical terminal comprising a second bit of the bus.

10. The circuit of any of claim 2 to claim 9, further configured to:
detect first signal activity in the first signal indicating a first type of transaction corresponding to the circuit activity of the processing circuit; and
generate, in the cloaking signal, second signal activity resembling the first type of transaction but not corresponding to the circuit activity of the processing circuit.

11. The circuit of any of claim 1 to claim 10, wherein the cloaking signal does not correspond to circuit activity in the processing circuit.

12. The circuit of any of claim 2 to claim 11, the cloaking circuit configured to:
generate the cloaking signal comprising pseudo-random noise on the electrical terminal based on a pseudo-random number generator.

13. The circuit of any of claim 1 to claim 12, the cloaking circuit further comprising a tunable filter, wherein the cloaking circuit is further configured to:
analyze the first signal to detect the indications of the circuit activity; and
tune the tunable filter to modify the first signal to reduce the indications of the circuit activity on the electrical terminal.

14. A cloaking circuit (104) configured to:
couple to an electrical terminal (102) coupled to a processing circuit (106), wherein a first signal (112) on the electrical terminal (102) indicates circuit activity of the processing circuit (106); and
modify the first signal (112) on the electrical terminal (102) to obfuscate the indications of the circuit activity.

15. A method of a cloaking circuit (104) coupled to an electrical terminal (102) coupled to a processing circuit (106) on an integrated circuit (IC) (108), wherein a first signal (112) on the electrical terminal (102) indicates circuit activity of the processing circuit (106), the method comprising:
modifying the first signal (112) on the electrical terminal (102) to obfuscate the indications of the circuit activity.
